# EUROPÄISCHE PATENTSCHRIFT

(11) **EP 1 588 531 B1**
(45) Veröffentlichungstag und Bekanntmachung des Hinweises auf die Patenterteilung: **28.06.2006**
(21) Anmeldenummer: 05701519.0
(22) Anmeldetag: 14.01.2005
(51) Int. Cl.: H04L 12/56

(54) **VERFAHREN ZUR ANPASSUNG DER LINK-GEWICHTE IM HINBLICK AUF EINE OPTIMIERTE VERKEHRSVERTEILUNG**
METHOD FOR ADAPTING LINK-WEIGHTS IN RELATION TO OPTIMISED TRAFFIC DISTRIBUTION
PROCEDE D'ADAPTATION DES PONDERATIONS DE LIAISONS DANS L'OPTIQUE D'UNE REPARTITION OPTIMISEE DU TRAFIC

(30) Priorität: 30.01.2004 DE 102004004793
(43) Veröffentlichungstag der Anmeldung: 26.10.2005
(73) Patentinhaber: SIEMENS AKTIENGESELLSCHAFT, 80333 München (DE)
(72) Erfinder: SCHOLLMEIER, Gero, 82131 Gauting (DE); WINKLER, Christian, 80796 München (DE)
(86) Internationale Anmeldenummer: PCT/EP2005/050149
(87) Internationale Veröffentlichungsnummer: WO 2005/074196

(56) Entgegenhaltungen:
- US-A1- 2003 028 670
- US-B1- 6 535 923
- US-B1- 6 584 071
- US-B1- 6 611 874

## Beschreibung

Die Erfindung betrifft ein Verfahren zur Anpassung von Link-Gewichten in einem mit Links gebildeten Kommunikationsnetz für eine im Hinblick auf ein für das Kommunikationsnetz erwartetes Verkehrsaufkommen und im Bezug auf einen die Linknutzung betreffenden Parameter optimierte Verkehrsverteilung innerhalb des Kommunikationsnetzes.

Die Erfindung liegt auf dem Gebiet der Kommunikationstechnik und behandelt insbesondere die Übertragung von Daten über paketorientierte Netze.

Die Optimierung der Datenübertragung über paketorientierte Netze, insbesondere über IP (Internet Protocol) basierte Netze, ist derzeit ein wichtiges Arbeitsfeld in dem Gebiet der Netzwerktechnologien. Vor allem die Übertragung von Daten mit unterschiedlichen Anforderungen an die Dienstgüte ist Voraussetzung für die Bereitstellung neuer Dienste, wie beispielsweise die Übertragung von Echtzeitverkehr über paketorientierte Netze. Um eine möglichst optimierte Übertragung zu erzielen, müssen verschiedene Parameter, wie Verzögerung, Störanfälligkeit oder Verkehrsverteilung berücksichtigt werden.

Eine möglichst gute Verteilung des Verkehrs, der über ein Kommunikationsnetz gelenkt wird, ist wichtig, einerseits im Hinblick darauf, Überlastsituationen zu vermeiden, andererseits ist eine gute Verkehrsverteilung die Voraussetzung für eine gute Ausnutzung der vorhandenen Ressourcen und insbesondere der zur Verfügung stehenden Bandbreite. Die Verkehrsverteilung innerhalb eines Kommunikationsnetzes ist abhängig von dem Routing innerhalb des Netzes bzw. der Pfade, auf denen der Verkehr durch das Netz geführt wird. Das wohl verbreiteste Routingverfahren bei paketorientierten Netzen, die auf dem IP-Protokoll basieren, ist das so genannte OSPF (Open Shortest Path First) Verfahren bzw. Protokoll. Dabei wird für zwischen zwei Knoten zu routenden Verkehr der im Sinne einer Metrik kürzeste Weg zwischen den beiden Knoten bestimmt. Diese Wegbestimmung erfolgt im Regelfall mit Hilfe von so genannten Link-Kosten. Im Folgenden wird auch der ebenfalls in der Fachwelt übliche Begriff Link-Gewicht bzw. Link-Gewichte synonym zu Link-Kosten verwendet. Die Link-Kosten bzw. Link-Gwichte sind den Links administrativ zugewiesene Werte, die ein Maß darstellen, wie günstig die Verwendung des jeweiligen Links ist. Im einfachsten Fall sind die Linkkosten für jeden Link gleich 1, d.h. alle Links werden gleich behandelt. Bei einem Routing, welches die Link-Kosten minimiert, wird damit automatisch der bezüglich der Anzahl der Links bzw. der Hops kürzeste Weg zwischen zwei Konten bestimmt. Durch die Änderung der Link-Kosten lässt sich die Bestimmung der Routen und damit die Verteilung des Verkehrs innerhalb eines Kommunikationsnetzes beeinflussen. Eine Steuerung der Verkehrsverteilung mittels Anpassung der Link-Kosten ist generell bei Routingverfahren möglich, welche mittels einer Metrik und der Zuweisung von Link-Kosten arbeiten, z.B. bei dem IS-IS (Intermediate System - Intermediate System) Protokoll oder zum Beispiel dem ECMP (Equal Cost Multipath) Verfahren, welches im Rahmen des OSPF Protokolls definiert wurde und die Verwendung von mehreren mittels OSPF bestimmten Pfaden für das Routing zwischen zwei Knoten vorsieht.

Herkömmliche Verfahren zur Optimierung der Verkehrsverteilung durch Anpassung der Link-Kosten sind verhältnismäßig kompliziert. Üblicherweise wird eine globale Optimierung der Link-Kosten durchgeführt, in dem eine Zielfunktion, die die Topologie des Netzes wiederspiegelt, optimiert wird. Wegen der Komplexität dieser Verfahren wird heutzutage häufig keine Optimierung der Link-Kosten durchgeführt. Unumgängliche Anpassungen der Link-Kosten werden häufig manuell gemacht, was ein hohes Fehlerrisiko birgt. Somit wird in realen Netzen eine sub-optimale Verkehrsverteilung in Kauf genommen.

In US-B1-6 611874 wird ein Routingverfahren offenbart, derart, dass vorgegebene Link-Gewichte bei der Berechnung der Pfade im Netzwerk auf vein iterativer Art und Weise berücksichtigt werden. Die besagten Routingverfahren werden miteinander bezüglich Effizienzkriterien verglichen.

Die Erfindung hat zur Aufgabe, ein einfaches Verfahren zur Bestimmung der Link-Kosten in einem Kommunikationsnetz im Hinblick auf eine optimierte verkehrsverteilung anzugeben.

Die Aufgabe wird durch den Anspruch 1 gelöst.

Die Erfindung geht von dem Gedanken aus, dass die Link-Kosten bzw. Link-Gewichte von stark belasteten Links erhöht werden sollten, um die Verkehrslast auf diesen Links zu reduzieren. Für die Optimierung wird ein Parameter verwendet, der ein Maß für die Belastung der einzelnen Links darstellt. Vorzugsweise ist dieser Parameter durch die Verkehrslast der einzelnen Links gegeben. Andere Möglichkeiten sind die auf die Linkbandbreite bezogene relative Verkehrslast, evtl. bei der Linkbenutzung anfallende, verkehrsabhängige Kosten (möglicherweise sogar in Form von real anfallenden Gebühren), die Verfügbarkeit der Links, die Laufzeit auf den einzelnen Links oder die Belastbarkeit der Endknoten der jeweiligen Links. Die Erfindung geht davon aus, dass das vom Netz zu tragende Verkehrsaufkommen bekannt ist oder zumindest eine Abschätzung dafür existiert. In der Verkehrstheorie verwendet man üblicherweise die so genannte Verkehrsmatrix, um das Verkehrsaufkommen genauer zu spezifizieren. Die Verkehrsmatrix gibt zwischen Paaren von Quell- und Zielknoten das zu transportierende Verkehrsvolumen an. Bei durch das Kommunikationsnetz geleiteten Verkehr entspricht ein Quellknoten beispielsweise einem Eintrittsknoten und ein Zielknoten beispielsweise einem Austrittsknoten, so dass die Verkehrsmatrix in Bezug auf diese zwei Knoten einen Eintrag für den zwischen ihnen transportierten Verkehr aufweist.

Für die Optimierung hinsichtlich des Parameters wird folgendermaßen vorgegangen. Zuerst werden die Link-Kosten der einzelnen Links initialisiert, d.h. ihnen werden Startwerte zugewiesen. Bei den Links wird vorzugsweise zwischen den beiden Richtungen unterschieden, d.h. dass eine Verbindung zwischen zwei Knoten zwei gerichteten Links entspricht, die jeweils einmal den Verkehr von dem ersten Knoten zu dem zweiten und einmal andersherum transportieren. Die Erfindung kann dann dahin weitergebildet werden, dass insbesondere für symmetrische Verkehrsmatrizen die Optimierung der Linkkosten für beide Richtungen gleichzeitig durchgeführt wird. Nach Zuweisen von Startwerten für die Linkkosten werden mit Hilfe des Routingprotokolls (beispielsweise OSPF oder IS-IS) Pfade für das Routing von Verkehr innerhalb des Kommunikationsnetzes berechnet. Mit Hilfe des angenommenen Verkehrsaufkommen lässt sich der auf diesen Pfaden beförderte Verkehr und damit das Verkehrsaufkommen auf den einzelnen Links berechnen bzw. bestimmen. Dann wird der Link ermittelt, für welchen der Parameter, beispielsweise das verkehrsaufkommen, den höchsten Wert hat. Anschließend wird der Wert der Linkkosten für den ermittelten Link erhöht, beispielsweise um 1. Die Berechnung der Pfade, die Bestimmung der Werte des Parameters, die Ermittlung des Links, für den der Parameter den höchsten Wert hat, und die Erhöhung des Wertes der Link-Kosten für den ermittelten Link wird als Schleife so lange durchlaufen, bis der in einem Schritt bestimmte Wert des Parameters für den Link mit dem höchsten Parameterwert höher ist, als der beim vorausgehenden Schritt bzw. Durchlauf bestimmte Parameter für den Link mit dem höchsten Parameterwert. Wenn dieses Abbruchkriterium erfüllt ist, werden die beim vorletzten Schritt bestimmten Werte für die Linkkosten und die zugehörigen Pfade für das Routing innerhalb des Kommunikationsnetzes festgelegt.

Durch die Erfindung wird eine verbesserte bzw. optimierte Verkehrsverteilung erreicht, indem Linkkosten von stark belasteten Links erhöht werden. Im Vergleich zu herkömmlichen verfahren ist das erfindungsgemäße Verfahren einfacher und lässt sich ohne Probleme implementierten. Bei der Pfadbestimmung im Rahmen des ECMP (Equal CosL Multipath) Verfahrens ist es sinnvoll, beim verfahren mit ganzzahligen Link-Kosten bzw. ganzzahligen Erhöhungen der Link-Kosten zu arbeiten, denn auf diese Weise ist wahrscheinlicher, dass sich Alternativwege mit gleichen akkumulierten Kosten für die Verbindung von zwei Knoten ergeben, so dass wie im ECMP-Verfahren vorgesehen, eine Verkehrsaufteilung auf die verschiedenen äquivalenten Pfade vorgenommen werden kann. Als Startpunkt ist es sinnvoll, alle Link-Kosten mit dem gleichen Wert zu initialisieren, beispielsweise mit 1.

Das erfindungsgemäße Verfahren kann mittels zentralen oder verteilten Rechenkapazitäten durchgeführt werden. Für Teile davon, z.B. die Pfadberechnung, kann auf herkömmliche Verfahren (die z.B. im Rahmen des OPSF oder IS-IS Protokolls definiert sind) zurückgegriffen werden.

Im Folgenden wird der Erfindungsgegenstand im Rahmen eines Ausführungsbeispieles anhand eines Ablaufdiagramms näher erläutert.

In dem Ausführungsbeispiel wird davon ausgegangen, dass das Kommunikationsnetz ein IP-Netz ist, welches mit Knoten und Links gebildet ist, und dass eine Pfadbestimmung für Routing im Rahmen des ECMP-Konzepts erfolgen soll. Zu Beginn werden die Linkkosten LK mit dem Wert 1 initialisiert. Auf Basis dieser Linkkosten LK werden dann die ECMP-Pfade P(LK) berechnet. Die Berechnung erfolgt, indem wie beim OSPF-Protokoll vorgesehen die Pfade mit den geringsten akkumulierten Linkkosten LK für das Routing zwischen zwei Knoten bestimmt werden.

Die Bestimmung von least-cost Pfaden zu einem Zielknoten kann beispielsweise auf folgende Weise durchgeführt werden. Es werden zunächst alle Nachbarknoten des Zielknotens bestimmt und diesen Nachbarknoten die Linkkosten als Knotenkosten zugewiesen. Damit ist das Routing für diesen ersten Ring von Knoten um den Zielknoten festgelegt. Im Folgenden wird ringeweise vorgegangen, wobei jeweils von einem Ring zu dem nächsthöherem gegangen wird. Ein Ring ist dabei dadurch gegeben, dass eine bestimmte Anzahl von Links mindestens durchlaufen werden muss, um den Zielknoten zu erreichen. Die Kosten der einzelnen Pfade werden Ring für Ring sukzessiv berechnet. Dabei setzen sich in jedem Schritt die Pfadkosten zusammen als die Summe der Linkkosten und der Knotenkosten, wobei Linkkosten die aktuellen Kosten des jeweiligen abgehenden Links sind und Knotenkosten die aktuellen Kosten des jeweiligen Endknotens dieses Links. Die Kosten der so berechneten Pfade werden dann verglichen und nur die Pfade beibehalten, die minimale Pfadkosten haben (wie es auch im Rahmen des OSPF-Konzeptes vorgesehen ist). Es werden häufig mehrere Pfade mit minimalen Pfadkosten gefunden werden, die für Verkehrsverteilung im Sinne des ECMP-Konzepts beibehalten werden. Andere verfahren zur Bestimmung von least-cost Pfaden, wie z.B. der Dijkstra Algorithmus können ebenso gut verwendet werden.

Bei der Neubestimmung der Pfade im Rahmen der Iterationen, die das erfindungsgemäße Verfahren vorsieht, kann wie oben verfahren werden. Nach Berechnung der Pfade P(LK) in Abhängigkeit der Linkkosten wird mittels der Verkehrsmatrix VM das Verkehrsvolumen V(L) der einzelnen Links bestimmt. Der Link L(Vmax,n) mit dem höchsten bzw. maximalen Verkehrsaufkommen Vmax,n wird identifiziert und das maximale Verkehrsaufkommen Vmax,n in diesem Schritt verglichen mit dem maximalen Verkehrsaufkommen vmax,n-1 beim vorhergehenden Schritt. Falls das maximale Verkehrsaufkommen Vmax,n beim aktuellen Schritt geringer ist als das maximale Verkehrsaufkommen Vmax,n-1 beim vorausgehenden Schritt, werden die Link-Kosten LK(L(Vmax,n)) des Links L(Vmax,n) mit dem maximalen Verkehrsaufkommen vmax,n um 1 erhöht und eine Neuberechnung der Pfade P(LK) in Abhängigkeit der geänderten Link-Kosten LK erfolgt. Die Schleife wird dann erneut durchlaufen. Anderenfalls, d.h. wenn die maximale Verkehrslast Vmax,n größer ist als im vorhergehenden Schritt, werden die im vorhergehenden Schritt bestimmten Link-Kosten LK als optimierte Link-Kosten LKopt und die dazugehörigen Pfade P(LK) als für eine optimierte Verkehrsverteilung bestimmte Pfade P(LKopt) für das Routing verwendet.

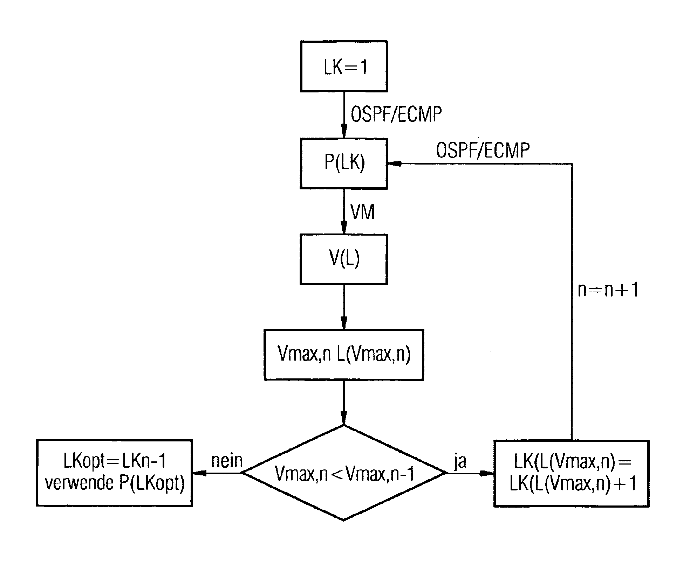

## Patentansprüche

1. Verfahren zur Anpassung von Link-Gewichten (LK) in einem mit Links (L) gebildeten Kommunikationsnetz für eine im Hinblick auf ein für das Kommunikationsnetz erwartetes Verkehrsaufkommen (VM) und in Bezug auf einen die Linknutzung betreffenden Parameter (V(L)) optimierte Verkehrsverteilung innerhalb des Kommunikationsnetzes,
**dadurch gekennzeichnet, dass**
mit Hilfe eines Rechners
a) den Links (L) des Kommunikationsnetzes Startwerte für die Link-Gewichte (LK) zugewiesen werden,
b) auf Basis der Link-Gewichte (LK) Pfade (P(LK)) für das Routing von Verkehr innerhalb des Kommunikationsnetzes berechnet werden,
c) die Werte des Parameters (V(L)) für die einzelnen Links (L) mittels der berechneten Pfade (P(L)) und dem erwarteten Verkehrsaufkommen (VM) bestimmt werden,
d) der Link (L(Vmax,n)), für den der Parameter (V(L)) den höchsten Wert (Vmax,n) hat, ermittelt wird,
e) das Link-Gewicht (LK(L(Vmax,n)) für den ermittelten Link (L(Vmax,n)) erhöht wird und
f) die Schritte b), c), d) und e) solange wiederholt werden, bis der im Schritt d) bestimmte Wert (Vmax,n) des Parameters (V(L)) für den Link (L(Vmax,n)) mit dem höchsten Parameterwert (vmax,n) höher als der beim vorausgehenden Schritt d) bestimmte Parameterwert (Vmax,n-1) für den Link mit dem höchsten Parameterwert ist.

2. Verfahren nach Anspruch 1,
**dadurch gekennzeichnet, dass**
der Parameter (V(L)) durch die absolute Verkehrslast, die auf die Linkbandbreite bezogene relative Verkehrslast, bei der Linkbenutzung anfallende verkehrsabhängige Kosten, die Link-Verfügbarkeit, die Laufzeit des jeweiligen Links oder die Belastbarkeit der Endknoten des jeweiligen Links gegeben ist.

3. Verfahren nach Anspruch 1 oder 2,
**dadurch gekennzeichnet, dass**
die Startwerte für die Link-Gewichte (LK) für alle Links (L) gleich gewählt werden.

4. Verfahren nach einem der vorhergehenden Ansprüche,
**dadurch gekennzeichnet, dass**
die Pfade (P(LK)) mittels des OSPF (open shortest path first) Protokolls oder des IS-IS (intermediate system - intermediate system) Protokolls berechnet werden.

5. Verfahren nach einem der vorhergehenden Ansprüche,
**dadurch gekennzeichnet, dass**
die bei Erfüllung des Abbruchkriteriums f) berechneten Pfade für Routing im Rahmen des ECMP (equal cost multi path) Konzeptes verwendet werden.

6. Verfahren nach einem der vorhergehenden Ansprüche,
**dadurch gekennzeichnet, dass**
die Link-Gewichte (LK) und deren Erhöhung immer durch ganze Zahlen ausgedrückt werden.

7. Verfahren nach einem der vorhergehenden Ansprüche,
**dadurch gekennzeichnet, dass**
die Erhöhung des Link-Gewichts (LK(L(Vmax,n)) für den ermittelten Link (L(Vmax,n)) für beide Übertragungsrichtungen des Links durchgeführt wird.

8. Verfahren nach einem der vorhergehenden Ansprüche,
**dadurch gekennzeichnet, dass**
das erwartete Verkehrsaufkommen (VM) mittels einer verkehrsmatrix beschrieben wird.

## Claims

1. Method for adapting link weights (LK) in a communication network formed with links (L) for an optimized traffic distribution within the communication network in respect of a traffic volume (VM) expected for the communication network and in relation to a parameter (V (L)) relating to the link usage,
**characterised in that**
with the aid of a computer
a) the links (L) of the communication network are assigned start values for the link weights (LK),
b) on the basis of the link weights (LK) paths (P(LK)) for the routing of traffic within the communication network are calculated,
c) the values of the parameter (V(L)) for the individual links (L) are determined by means of the calculated paths (P(L)) and the expected traffic volume (VM),
d) the link (L(Vmax,n)), for which the parameter (V(L)) has the highest value (Vmax,n) is determined,
e) the link weight (LK(L(Vmax,n)) for the link determined (L(Vmax,n)) is increased and
f) steps b), c), d) and e) are repeated until the value (Vmax,n) of the parameter (V(L)) for the link (L(Vmax,n)) with the highest parameter value (Vmax,n) determined in step d) is higher than the parameter value (Vmax,n-1) for the link with the highest parameter value in the previous step d).

2. Method in accordance with claim 1,
**characterised in that**
the parameter (V(L)) is produced by the absolute traffic load, the relative traffic load related to link bandwidth, traffic-related costs arising for using the link, the link availability, the delay time of the relevant link or the load capabilities of the end node of the relevant link.

3. Method in accordance with claim 1 or 2,
**characterised in that**
the start values for the link weights (LK) are selected to be the same for all links (L).

4. Method in accordance with one of the previous claims.
**characterised in that**
the paths (P(LK)) are calculated by means of the OSPF (open shortest path first) protocol or the IS-IS (Intermediate System - Intermediate System) protocol.

5. Method in accordance with one of the previous claims.
**characterised in that**
the paths calculated if the abort criterion f) is fulfilled are used for routing within the framework of the ECMP (Equal Cost Multi Path) concept.

6. Method in accordance with one of the previous claims,
**characterised in that**
the link weights (LK) and their increase are always expressed by whole numbers.

7. Method in accordance with one of the previous claims.
**characterised in that**
the link weight (LK(L(Vmax, n)) is increased for both directions of transmission of the link for the link determined (L (Vmax, n)) .

8. Method in accordance with one of the previous claims.
**characterised in that**
the expected traffic volume (VM) is described by means of the traffic matrix.

## Revendications

1. Procédé d'adaptation de poids de liaisons (LK) dans un réseau de communication constitué de liaisons (L) pour une répartition du trafic optimisée, à l'intérieur du réseau de communication, au regard d'une densité du trafic (VM) escomptée pour le réseau de communication et par rapport à un paramètre (V(L)) concernant l'utilisation des liaisons, **caractérisé en ce que**, à l'aide d'un ordinateur,
a) des valeurs de départ pour les poids des liaisons (LK) sont affectées aux liaisons (L) du réseau de communication,
b) sur la base des poids des liaisons (LK), des chemins (P(LK)) sont calculés pour le routage du trafic à l'intérieur du réseau de communication,
c) les valeurs du paramètre (V(L)) pour les liaisons individuelles (L) sont déterminées au moyen des chemins calculés (P(L)) et de la densité de trafic escomptée (VM),
d) on détermine la liaison (L(Vmax,n)) pour laquelle le paramètre (V(L)) a la valeur la plus élevée (Vmax, n),
e) on augmente le poids de la liaison (LK(L(Vmax, n))) pour la liaison déterminée (L(Vmax, n)) et
f) on répète les étapes b), c), d) et e) jusqu'à ce que la valeur (Vmax, n), déterminée à l'étape d), du paramètre (V(L)) pour la liaison (L(Vmax, n)) avec la valeur paramétrique la plus élevée (Vmax, n) soit supérieure à la valeur paramétrique (Vmax, n-1), déterminée à l'étape précédente d), pour la liaison avec la valeur paramétrique la plus élevée.

2. Procédé selon la revendication 1, **caractérisé en ce que** le paramètre (V(L)) est fourni par la charge de trafic absolue, la charge de trafic relative par rapport à la largeur de bande de la liaison, des frais en fonction du trafic, lesquels sont exposés lors de l'utilisation de la liaison, la disponibilité de la liaison, le temps de propagation de la liaison respective ou la capacité de charge des noeuds terminaux de la liaison respective.

3. Procédé selon la revendication 1 ou 2, **caractérisé en ce que** les valeurs de départ pour les poids des liaisons (LK) sont choisies identiques pour toutes les liaisons (L).

4. Procédé selon l'une des revendications précédentes, **caractérisé en ce que** les chemins (P(LK)) sont calculés au moyen du protocole OSPF (open shortest path first) ou du protocole IS-IS (intermediate system - intermediate system).

5. Procédé selon l'une des revendications précédentes, **caractérisé en ce que** les chemins calculés lorsque le critère d'interruption est rempli f) sont utilisés pour le routage dans le cadre du concept ECMP (equal cost multi path).

6. Procédé selon l'une des revendications précédentes, **caractérisé en ce que** les poids des liaisons (LK) et leur augmentation sont toujours exprimés en chiffres entiers.

7. Procédé selon l'une des revendications précédentes, **caractérisé en ce que** l'augmentation du poids de la liaison (LK(L(Vmax, n))) est opérée pour la liaison déterminée (L(Vmax, n)) pour les deux sens de transmission de la liaison.

8. Procédé selon l'une des revendications précédentes, **caractérisé en ce que** la densité de trafic (VM) escomptée est décrite au moyen d'une matrice de trafic.
